# DEMANDE DE BREVET EUROPEEN

(11) **EP 1 940 116 A2**
(43) Date de publication de la demande: **02.07.2008**
(21) Numéro de dépôt: 07291345.2
(22) Date de dépôt: 09.11.2007
(51) Int. Cl.: H04L 29/06, G06Q 30/00

(54) **Procédé et système pour effectuer des transactions à partir d'appareils électroniques portables connectables à un réseau de communication, et appareil électronique portable associé**

(30) Priorité: 10.11.2006 FR 0609856
(71) Demandeur: Archos, 91430 Igny (FR)
(72) Inventeur: Hamdane, Noureddine, 94110 Arceuil (FR); Le Franc, Roland, 75014 Paris (FR)
(74) Mandataire: Pontet, Bernard

(57) **Abrégé**

Procédé pour effectuer des transactions avec une pluralité de sites fournisseurs de services à partir d'un appareil électronique portable connectable à un réseau de communication, comprenant
- une connexion dudit appareil électronique à un site d'intermédiation via ledit réseau de communication, ce site d'intermédiation étant connectable auxdites sites fournisseurs de services, et
- une transmission audit appareil électronique portable, d'informations provenant d'un ou plusieurs desdits sites fournisseurs de produits et/ou de services, sous un format adapté aux ressources dudit appareil électronique portable.

## Description

La présente invention concerne un procédé pour effectuer des transactions à partir d'appareils électroniques portables connectables à un réseau de communication. Elle vise également un système mettant en oeuvre ce procédé, ainsi qu'un appareil électronique portable associé.

Il s'agit d'offrir aux utilisateurs d'appareils électroniques portables connectables à Internet des possibilités d'achats en ligne de biens et/ou de services à l'image de ce qui est proposé aux utilisateurs d'ordinateurs connectés.

On connaît des sites de commerce en ligne sur Internet proposant des objets matériels, immatériels ou des services. Ces sites et les moyens qu'ils utilisent ont été optimisés pour des clients potentiels utilisant un ordinateur comme moyen pour accéder aux propositions, pour réaliser les transactions et éventuellement pour recevoir l'objet de la transaction lorsqu'il s'agit par exemple de contenus musicaux ou audiovisuels. En outre, les sites de commerce en ligne traditionnels offrent en une seule entité, la gestion de la présentation de l'offre, de la transaction, de la facturation et de la livraison des biens ou des services.

On connaît par ailleurs des solutions comme « Opera mini » qui permettent de consulter n'importe quelles pages web à partir d'appareils portables tels que des téléphones portables de nouvelle génération.

On connaît aussi des solutions telles que décrites dans le brevet US7003793 pour proposer des vidéos à la demande sur des terminaux portables par l'intermédiaire d'infrastructures de télécommunications sans fil.

Les solutions à l'état de l'art posent de nombreux problèmes tels que la navigation au sein d'une offre dont la présentation a été conçue pour être visualisée sur un grand écran avec une interactivité reposant sur des moyens sophistiqués et précis comme par exemple une souris. La visualisation de pages riches en information sur des écrans de petite taille, même s'ils ont une bonne résolution et s'ils sont de type tactile reste problématique. En outre les pages web présentées dans les sites marchands intègrent de plus en plus d'objets animés ou vidéo pour les rendre attractives, en utilisant par exemple les solutions « flash » et/ou « flash video » de la société «Macromedia/Adobe ». La restitution de ces objets animés est problématique sur des plateformes techniques à faible coût ayant des ressources limitées tant en moyens de restitution qu'en puissance de calcul. Par ailleurs, les procédures mises en oeuvre pour effectuer des transactions sécurisées reposent généralement sur des solutions plus ou moins propriétaires ou encore sont associées à un système d'exploitation d'ordinateur tel que ceux de Microsoft ou d'Apple qu'il n'est pas possible de mettre en oeuvre dans des équipements électroniques portables, à faible coût et/ou reposant sur d'autres systèmes d'exploitation. Finalement, les seules solutions viables à l'état de l'art reposent sur l'intégration verticale de toute la filière depuis la plateforme de commerce électronique jusqu'à la fourniture des solutions pour y accéder sous la forme de matériels et/ou de logiciels. Cela étant, les solutions verticales présentent des failles potentielles de sécurité en ce qu'elles reposent en partie sur l'exécution de programmes non contrôlés sur le poste client. Les solutions permettant de consulter des pages web à partir d'appareils électroniques portables tels que des téléphones après épuration et compression de pages web standards n'offrent pas une ergonomie satisfaisante pour répondre au besoin du commerce en ligne qui requiert à la fois qualité de service, sécurité, attractivité pour les clients et commodité d'usage. Les solutions de conversion automatique telles que « Opera mini » sont séduisantes en théorie par le caractère universel que revêt le fait de pouvoir explorer l'intégralité de l'espace Internet. Cependant en pratique ces solutions ne sont pas exploitables pour des applications de commerce électronique car elles n'offrent pas les caractéristiques requises énoncées précédemment.

L'invention vise en partie à rendre possible dans des conditions acceptables, l'adjonction d'un canal de ventes supplémentaire basé sur l'utilisation d'appareils électroniques portables à un site marchand en ligne.

La structure tripartite sur laquelle repose l'invention est présentée sous la forme d'une pluralité d'appareils électroniques accédant à une pluralité de sites marchands via un site d'intermédiation pour des raisons de clarté de la description. Cela étant, l'invention peut être mise en oeuvre sous des formes différentes sans sortir de son cadre. Par exemple les sites dits marchand peuvent être eux-mêmes des agrégateurs de proposition tierces, ils peuvent également être des frontaux commerciaux proposant des biens ou de services fournis par des tiers.

De même les appareils électroniques portables peuvent représenter une population d'équipements hétérogènes se conformant à des standards différents et pouvant nécessiter des processus d'adaptation ou de conversion complémentaires au sein du site d'intermédiation pour uniformiser les moyens de fourniture des services. Les moyens utilisés pour mettre en oeuvre le site d'intermédiation selon l'invention peuvent également être utilisés pour héberger un site marchand et réciproquement.

L'invention résout en outre le problème de l'adaptation de la présentation de la proposition de biens et/ou de services aux moyens limités d'interaction avec l'utilisateur qu'offrent les appareils portables. L'invention offre également le support des transactions commerciales, et éventuellement participe à la gestion des droits associés aux biens ou services le cas échéant.

Un autre avantage de l'invention réside dans la capacité du site d'intermédiation à renforcer la confiance et la sécurité pour l'ensemble des parties prenantes. Le client n'a plus à redouter la perte de confidentialité concernant ses données personnelles liée à l'exécution de programmes silencieux transmis par le site marchand sur son poste ni à craindre l'introduction de virus ou autres logiciels espions « spywares » par ce biais dans son système. En outre, l'invention est avantageusement associée à la mise en oeuvre de moyens de communication sécurisés entre les parties prenantes susceptibles d'échanger de l'information sensible. Ainsi les échanges entre les sites marchands et le site d'intermédiation seront cryptés par exemple en utilisant des liaisons sécurisées telles que https. Le site d'intermédiation sera avantageusement associé à une adresse IP ou à une pluralité d'adresses IP fixes connues de ces correspondant et pouvant donc être vérifiées. Il est également prévu dans l'invention de gérer des certificats garantissant aux sites marchand que le client distant utilise bien un appareil officiel connu et identifié.

Les sites marchands bénéficient pour leur part d'une identification et d'une traçabilité plus poussée que dans les systèmes de vente en ligne traditionnels. Le système selon l'invention renforce le degré de confiance dans le système du côté des sites marchands partenaires notamment par des services que peut procurer le site d'intermédiation. Il peut s'agir par exemple de fournir à chaque site marchand une notation du degré de confiance associé aux clients, basée sur une mémorisation mutualisée des transactions passées et/ou de tout incident survenus avec d'autres fournisseurs.

Le site d'intermédiation peut également offrir des fonctions annexes de renforcement de la sécurité générale par l'ajout de fonctionnalités reposant sur la connaissance d'un code unique associé au produit. Il peut s'agir par exemple d'une capacité à bloquer le fonctionnement d'un appareil par l'introduction d'une commande appropriée à l'occasion d'une communication entre le site d'intermédiation et cet appareil. La commande de blocage peut également être incluse dans un contenu téléchargé depuis le site d'intermédiation de manière indirecte, par exemple par le biais d'un ordinateur. Le blocage à distance du fonctionnement d'un appareil peut être déclenché par le site d'intermédiation sur demande d'un site marchand en raison par exemple d'un incident de paiement. Le blocage peut être consécutif à une déclaration de perte ou de vol de l'appareil par son propriétaire enregistré.

La demande de blocage peut également être formulée par un tiers fournisseur d'un service d'assurance au propriétaire. Avantageusement, lors de chaque nouvelle connexion, le site d'intermédiation compare l'identifiant de l'appareil aux identifiants contenus dans un fichier dédié aux appareils à bloquer et transmet la commande de blocage à l'appareil concerné en cas d'identité avec l'un des identifiant du fichier. Bien entendu seront prévus des moyens de déblocage du fonctionnement de l'appareil et de restauration des droits de l'utilisateur. Il peut s'agir de solutions de déblocage à distance ou de solutions de déblocage nécessitant une intervention physique sur l'appareil dans un centre agréé.

Il est également possible de ne réduire que partiellement les fonctionnalités de l'appareil et/ou le champ des services auquel il peut accéder. Le premier niveau d'action possible concerne le verrouillage de la possibilité d'acquérir des biens et/ou des services selon l'invention. Cette action offre l'avantage de pouvoir être prise au sein même du site d'intermédiation et de ne pas nécessiter la participation des appareils électroniques portables.

Le code unique d'appareil peut également être utilisé dans le cadre d'un marquage des fichiers de contenus acquis par un client avec un filigrane « watermarking » ou une empreinte « fingerprinting » numériques pour en assurer la traçabilité si nécessaire.

Bien entendu tous les aspects du procédé ayant trait au paiement ou à l'imputation du service utiliseront des moyens de cryptage à l'état de l'art.

Le procédé selon l'invention est caractérisé en ce qu'il comprend les étapes suivantes :
- Connexion d'un appareil électronique client à la « galerie commerciale » en ligne hébergée par ledit site d'intermédiation, éventuellement identification et/ou authentification de l'appareil et/ou du client au stade de la connexion,
- Présentation en retour vers l'appareil client d'une offre générale pouvant agréger des offres directes et des offres tierces avec une ergonomie adaptée aux ressources de l'appareil,
- Navigation dans l'espace des propositions directes ou des propositions indirectes proposées,
- Sélection d'un ou de plusieurs objets avec échantillonnage gratuit éventuel
- Transaction après authentification préalable de l'appareil client et/ou d'authentification de la personne cliente,
- Livraison à l'endroit ou aux endroits spécifiés.
La livraison à l'endroit ou aux endroits spécifiés peut être réalisée ou organisée directement par le site fournisseur ou encore être organisée ou réalisée par le site d'intermédiation sans sortir du cadre de l'invention. De même, on ne sort pas du cadre de l'invention si l'adaptation aux caractéristiques de l'appareil électronique portable et/ou la transmission de cette information est/sont réalisées par un site fournisseur. Avantageusement l'appareil électronique portable peut inclure une icône de l'écran ou un bouton matériel dédié pour se connecter directement à la « galerie commerciale » en ligne.

Le site d'intermédiation, par les services qu'il offre, est plus proche de la « galerie commerciale » en ligne que du site marchand traditionnel en ce qu'il regroupe potentiellement plusieurs « enseignes » de sites marchands partenaires dans un même espace initial partagé. Dans un premier mode de mise en oeuvre chaque site marchand partenaire prend en charge ses propres transactions financières. Dans un autre mode de mise en oeuvre, le site d'intermédiation selon l'invention propose au client une « caisse centrale » c'est à dire un système de gestion des transactions commerciales commun à toutes les enseignes partenaires.

Lorsque l'objet de la vente est une oeuvre de l'esprit soumise à des droits et livrable par téléchargement, en général le contenu numérique est encrypté avant d'être transféré et ne peut être exploité que sur un appareil disposant d'une licence appropriée.

L'offre, au sens de l'invention peut concerner indifféremment des objets matériels, des objets immatériels pérennes tels que des fichiers de contenu soumis au régime des droits d'auteur, protégés ou non, livrés en téléchargement par exemple des oeuvres écrite ou parlées, de la musique, de l'image fixe ou de la vidéo. Il peut s'agir des mêmes objets immatériels mais livrés pour une consommation en direct sans stockage durable. Dans cette catégorie figure toutes les formes de « streaming » de musique, d'oeuvres audio parlées ou jouées, d'émission de radio éventuellement enrichie d'image fixe ou de vidéo.

La présentation en retour de l'offre vers l'appareil client peut se faire dans un format adapté aux ressources de l'appareil en particulier à la taille, au format et à la résolution de son écran. Cette adaptation peut également concerner les moyens de navigation et de sélection mis en oeuvre dans l'appareil. Un des avantages principaux du choix de sites marchands partenaires par rapport à la fourniture d'un accès ouvert à tous les sites marchands du web est que les pages présentées peuvent être mieux adaptées aux ressources de l'appareil électronique portable. L'adaptation peut être mise en oeuvre directement au sein du site marchand ou encore elle peut être mise en oeuvre dans le site d'intermédiation. Pour réaliser avantageusement l'adaptation via le site d'intermédiation, le site marchand fournit au site d'intermédiation un accès à son catalogue sous la forme d'un fichier ou d'un flux d'information structurée selon un standard par exemple XML qui en général existe en tant qu'ossature de son propre site principal. Il peut être cependant nécessaire de procéder à des adaptations par exemple en adaptant l'interprétation de certaines balises ou champs d'information. Les outils de commerce en ligne pour réaliser la transaction reposent en général sur l'exécution d'un programme transmis sur la plateforme du client. Il peut s'agir par exemple de l'exécution d'un module ActiveX dans l'univers Microsoft ou encore d'un applet Java.

Les appareils électroniques portables clients à faible coût dont il est question dans l'invention ne disposent pas en général des ressources techniques qui permettraient d'exécuter ces logiciels comme le ferait un ordinateur c'est pourquoi, dans le mode préféré de mise en oeuvre de l'invention, les programmes transmis par les sites marchands, normalement destinés à être exécutés sur les postes clients sont exécutés dans le serveur dudit site d'intermédiation. Cette variante de mise en oeuvre permet au système selon l'invention de réaliser des transactions avec n'importe quel site marchand connecté à Internet/www.

Il est cependant possible de simplifier la prise en charge des transactions lorsque le site marchand est connu du site d'intermédiation, par exemple dans le cadre d'un partenariat. En effet dans ce cas le site d'intermédiation peut fournir directement les informations dont a besoin le site marchand pour réaliser la transaction sans avoir à recevoir et exécuter un programme spécifique. Ceci se fait par un ou plusieurs envois d'information sur Internet/www selon les techniques à l'état de l'art par les sites client et fournisseur (web services).

Dès que la transaction est finalisée entre le site d'intermédiation et le site marchand, ce dernier peut procéder à la livraison directe vers le ou les clients concernés. Les coordonnées du ou des clients sont transmises par le site d'intermédiation au site marchand. La nature des coordonnées transmises dépend de la nature de l'objet à livrer. Il peut s'agir de coordonnées postales s'il s'agit de biens matériels ou d'adresses dans le réseau s'il s'agit de biens sur support numériques livrables par télétransmission. Une même transaction peut engendrer plusieurs livraisons vers un même client et/ou vers des clients différents. Une transaction peut également être destinée à une ou plusieurs autres adresses physiques ou adresses d'appareils dans le réseau que l'adresse normalement associée au compte client, ceci par exemple dans le cadre d'offres de cadeaux à des tiers, d'achats groupés etc.

Le site d'intermédiation selon l'invention comprend une base de données ou plusieurs bases de données possiblement interconnectées. Une base de données dans le site d'intermédiation associe les informations classiques d'un compte client à l'adresse dans le réseau et/ou à un code unique d'identification de l'appareil ou des appareils concernés. Les informations classiques d'un compte client incluent les éléments d'identification du client et les informations nécessaires au paiement.

Le système selon l'invention permet un vaste choix de mise en oeuvre relativement aux offres proposées, au lieu de leur stockage et au chemin qu'emprunte l'information correspondante pour arriver jusqu'à l'utilisateur. Ainsi un appareil électronique portable qui se connecte au site d'intermédiation peut recevoir des offres indifféremment hébergées par le site d'intermédiation, hébergées par un site fournisseur et transiter par le site d'intermédiation ou être directement envoyées à l'appareil électronique par le site fournisseur sans passer par le site d'intermédiation. Il est également possible de passer d'un mode d'hébergement à l'autre au cours de la navigation dans l'espace des propositions accessibles depuis l'appareil électronique portable sans sortir du cadre de l'invention.

Le système selon l'invention permet en outre un vaste choix de mise en oeuvre relativement à la gestion du paiement lors des transactions marchandes. Il est possible de localiser la connaissance des informations de paiement dans l'appareil électronique portable qui pourrait par exemple incorporer des moyens de lecture d'un moyen de paiement électronique ou des moyens de saisir d'informations de paiement comme un numéro de carte bancaire.

Les informations de paiement peuvent être avantageusement stockées dans le site d'intermédiation. Les informations de paiement peuvent également rester dans le système d'information des sites marchands partenaires où encore être stockées dans un site spécialisé externe au système selon l'invention par exemple chez un tiers de confiance. On reste dans le cadre de l'invention quel que soit le choix de la localisation des informations de paiement. Ce choix a des implications en matière de sécurité et de choix des moyens technique mis en oeuvre. Les informations de paiement doivent être conservées dans des moyens de stockages protégés et les moyens de transmissions mis en oeuvre pour transmettre ces informations doivent être cryptés de bout en bout selon les techniques à l'état de l'art. Dans le cas où les informations de paiement ne sont pas issues de l'appareil portable, des informations d'identification/authentification, cryptées ou non, sont envoyées par cet appareil vers le site d'intermédiation.

Dans l'hypothèse où le site d'intermédiation ne contient pas non plus les informations de paiement, il transmet des informations d'identification/authentification du client au site marchand. Dans un mode de mise en oeuvre dans lequel un site externe spécialisé est utilisé pour stocker les informations de paiement alors les informations d'identification/authentification du client doivent lui être transmises. Le site externe se charge alors de transmettre, sous sa responsabilité, les informations de paiement du client au site marchand en utilisant des moyens sécurisés à l'état de l'art. Les informations d'identification/authentification du client peuvent être identiques de bout en bout mais elles peuvent aussi être différentes et seulement en correspondance biunivoque par exemple au moyen de mécanismes d'association dans des bases de données. Avantageusement, et particulièrement dans le cas où les transmissions des dites informations d'identification/authentification du client utilisent des moyens peu surs, une procédure de contrôle complémentaire sera mise en oeuvre lors de la validation de la transaction. A cet effet, il peut être demandé au client de saisir un code additionnel comme par exemple le code à trois chiffres inscrit au dos des cartes bancaires.
Dans le mode de mise en oeuvre préféré de l'invention, le site d'intermédiation propose au client de mémoriser ses coordonnées bancaires pour faciliter ses transactions ultérieures. Le client a la possibilité de refuser cette facilité. Il devra alors fournir lui-même cette information lors de chaque transaction. Même en l'absence de la mémorisation directe ou indirecte des informations bancaires le site d'intermédiation facilite les transactions en mémorisant d'autres informations comme par exemple des noms de client, de destinataire, des adresses de livraisons, des identifiants d'appareils portables électroniques. Ces informations font avantageusement partie d'un récapitulatif de profil proposé au client pour acceptation, pour sélection dans une liste s'il existe plusieurs informations du même type préalablement enregistrées ou pour modification par le site d'intermédiation avant envoi des informations dans le format approprié au site marchand ou à la pluralité de sites marchands le cas échéant.
Dans les modes de mise en oeuvre de l'invention où le client a été préalablement authentifié, selon le niveau de confiance que l'on peut accorder à cette authentification et à la chaîne de transmission qu'emprunte l'information, la transaction peut être validée par la saisie d'un code simplifié, par la reconnaissance d'une information ou d'une empreinte vocale, par une signature graphique dans le cas d'un écran tactile ou encore dans le cas de la mise en oeuvre d'au moins une possibilité d'acquisition et de reconnaissance d'une caractéristique biométrique du client.

Une autre disposition avantageuse relative à la mise en ouvre de l'invention est l'uniformisation des informations d'identification/authentification du client et des solutions de confirmation/validation pour faciliter les traitements dans le cas d'achats venant de multiples sites marchands au sein d'une même session /transaction du client. En cas d'impossibilité d'uniformisation, le site d'intermédiation peut néanmoins effectuer la consolidation des achats pour chaque site marchand en lui fournissant les informations qui lui sont propres à partir d'une base de données qui les contient en association avec l'information d'identification/authentification unique du client issue de l'appareil électronique portable. Le site d'intermédiation peut également consolider d'éventuels moyens différents de confirmation/validation.

Avantageusement la base de données pourra mémoriser des caractéristiques des achats précédemment réalisés et/ou des pages visitées. Ces informations pouvant être utilisées pour établir un profil de préférences utilisable dans le cadre d'offres promotionnelles ciblées, de présentation contextuelle d'offres, de publicité ciblée, de questionnaires et autres sondages d'opinion, de programmes de fidélisation, de source de revenu par valorisation des informations collectées etc.

Le site d'intermédiation contiendra une base de données support de la présentation de l'offre disponible agrégeant des offres de différentes origines dont des offres provenant de sites marchands partenaires.

Les informations proposées seront adaptées au dispositif destinataire, par exemple à un lecteur multimédia portable PMP, un assistant multimédia portable PMA, un assistant numérique portable PDA, un téléphone portable, une console de jeux ou un ordinateur.

L'adaptation pourra avantageusement aller jusqu'à une optimisation en fonction de la taille d'écran et de son format, de sa résolution et/ou des moyens de navigation et de sélection associé. L'information présentée pourra également faire l'objet d'un filtrage en fonction de critères techniques, de critères juridiques ou encore en fonction du type de support ciblé. Par exemple dans le cas de vente de vidéos à la demande, le catalogue offert pourra être différencié en fonction des moyens de décodage et/ou de protection embarqués, par exemple de décryptage, ou encore en fonction des droits associés aux oeuvres relativement au mode de consommation par exemple pour un stockage permanent, pour une visualisation en consommation immédiate, pour une visualisation lors d'un téléchargement progressif, pour une visualisation par l'intermédiaire d'un téléviseur, pour une visualisation en mobilité sur un équipement portable etc.

L'adaptation peut se faire en outre dans l'espace des choix de sites marchands ou encore dans l'espace des offres proposées par un site marchand donné en fonction de critères liés au client comme par exemple sa localisation/nationalité.

Un des éléments les plus importants dans la qualité perçue du service offert est la dynamique de l'interactivité. Les utilisateurs sont habitués à une navigation fluide et réactive lorsqu'ils achètent en ligne à partir de leur ordinateur connecté à Internet/www par des moyens à haut débit. Il convient de se rapprocher autant que possible de la réactivité à laquelle les utilisateurs sont habitués en utilisant des moyens qui ne le permettent pas naturellement. L'invention permet d'améliorer sensiblement la réactivité du système pour effectuer des transactions par rapport aux solutions à l'état de l'art. Ceci repose sur la mise ne oeuvre dans le site d'intermédiation de tout ou partie des raffinements fonctionnels décrits ci-après. Les flux issus des sites marchands standards sont optimisés pour les ordinateurs et intègrent des objets additionnels tels qu'images, son, animation et/ou vidéo. Le site d'intermédiation peut retirer les objets incompatibles avec les moyens de lecture de l'appareil électronique portable. Il peut y avoir avantage à retirer des objets non indispensables pour diminuer les quantités d'information à transmettre ce qui conduit in fine à améliorer la réactivité du système. Le site d'intermédiation peut aussi convertir des objets d'un format incompatible en un format compatible ou d'un format compatible mais peut efficace en un format compatible plus efficace. Les offres commerciales sont presque systématiquement associées à des images affichées sous forme de vignettes de petite taille dans les écrans. L'objet qui apparaît comme une image de petite taille dans l'écran de l'utilisateur après intervention du logiciel de navigation correspond en général à un fichier contenant une quantité d'information largement supérieure au besoin. Toutes choses-égales par ailleurs, il est possible de réduire sensiblement le volume des informations transmises en transférant des fichiers d'image dont le poids correspond de manière exacte ou approchée à la résolution nécessaire pour un affichage correct compte tenu de la taille relative de l'image dans l'écran et de la taille de l'écran et de sa résolution.
Pour diminuer les temps de réaction au cours de la navigation et permettre à l'utilisateur d'anticiper ses actes de navigation/sélection, on optera avantageusement pour un transfert du contenu des écrans par page entière avec un affichage en résolution progressive. On complètera avantageusement cette disposition en arrêtant le transfert en cours d'une page dès qu'une action de l'utilisateur sur une commande de navigation/sélection est détectée.
D'autres améliorations visant à rendre plus réactif le système peuvent être mises en oeuvre. Il peut s'agir par exemple de moyens de navigation adaptés à la navigation par page. Le site d'intermédiation intégrera de préférence des capacités de stockage temporaire dites mémoires cache pour accélérer l'accès aux pages les plus fréquemment consultées. Cette mémoire temporaire locale peut être placée en amont du site d'intermédiation pour limiter les volumes d'information à recevoir depuis les sites marchands concernés. Il est également possible de placer de la mémoire temporaire en aval du site d'intermédiation pour stocker les pages, les plus souvent appelées par les appareils électroniques portables, qui ont subi tout ou partie des traitements d'adaptation selon l'invention. Le stockage temporaire au sein du site d'intermédiation peut ne concerner qu'une partie des flux d'information à gérer par exemple les fichiers d'image ou d'autres objets multimédia volumineux appelés au sein des pages de proposition à transmettre aux appareils électroniques portables.

L'objectif d'amélioration de la dynamique de la navigation peut également reposer sur la transmission de chaque page en deux temps, d'abord l'architecture de la page incluant suffisamment d'information textuelle dans chaque objet sélectionnable et/ou illustrant le contexte du choix puis dans un second temps les images et autres éléments décoratifs ou d'accompagnement multimédia d'intérêt non primordial. Ainsi l'utilisateur peut naviguer plus rapidement vers l'objet de sa recherche en gagnant du temps dans les étapes intermédiaires.

Les sites marchands partenaires, dont le contenu peut être agrégé par le site d'intermédiation, ont une architecture standard dont l'évolution suit celle des outils informatiques du marché. Classiquement un site marchand 2 contient une base de donnée catalogue 3, une base de données clients 4 et dans le cas de la ventes d'objets audio et/ou vidéo numériques, une base de données de contenus protégés 5.

Ces bases de données, séparées pour la clarté de la description peuvent être partiellement ou totalement fusionnées sans sortir du cadre de l'invention. En outre, dans le cas de la vente d'objets audio et/ou vidéo numériques, l'objet de la transaction et de la livraison peut n'être que la licence d'utilisation. En effet, le client peut déjà avoir en sa possession le contenu numérique protégé qu'il ne peut exploiter sans la licence .correspondante. Il est tout à fait envisageable de séparer les moyens pour diffuser les contenus numériques protégés et les moyens pour les exploiter. Les contenus cryptés peuvent être diffusés massivement par des moyens peu coûteux tels que par des systèmes de télédiffusion ou de télétransmission numériques ou encore par l'intermédiaire de supports physiques. L'invention reste une solution avantageuse dans un tel contexte, l'objet de la transaction et de la livraison est alors la ou les licences appropriées.

Dans le mode de mise en oeuvre préféré de l'invention, un nouveau compte client est ouvert après avoir renseigné un certain nombre de champs d'information au cours d'une session dite d'enregistrement du nouveau client et/ou du nouveau produit à partir d'un ordinateur. On ne sort cependant pas du cadre de l'invention dans les cas où la création d'un nouveau compte se fait directement à partir depuis l'appareil électronique portable ou nécessite tout autre acte initial spécifique impliquant éventuellement d'autres appareils tels qu'ordinateurs, bornes spécifiques, téléphone etc. Des actes initiaux spécifiques peuvent être également nécessaires dans le cadre de certains procédés de gestion des droits mis en oeuvre pour exploiter des contenus audio et/ou vidéo protégés achetés en ligne.

Les sites marchands partenaires ont vocation à être optimisés pour les équipements terminaux les plus nombreux, typiquement les microordinateurs et d'évoluer en fonction des possibilités de ces derniers.

Le rôle principal du site d'intermédiation est d'adapter continûment les offres de ces sites qui sont de plus en plus sophistiquées aux contraintes et aux ressources limitées des appareils électroniques portables connectables à Internet par des moyens avec ou sans fils selon l'invention. Cette adaptation vise essentiellement les moyens de restitution, de navigation et de sélection des objets dans l'espace des propositions mais elle peut également porter sur l'offre de contenu elle-même.
Il est possible de définir un niveau d'adaptation standard pouvant convenir sensiblement à la plupart des appareils électroniques portables. Dans ce mode d'adaptation par défaut il peut s'agir par exemple de retirer les objets trop volumineux ou non supportés ou encore par exemple de réduire éventuellement le poids de certaines images. Cependant l'adaptation peut être optimisée en fonction des caractéristiques des appareils électroniques connectés pour améliorer la qualité de service perçue.

Dans une mise en oeuvre particulièrement efficace de l'invention, un appareil électronique portable, qui se connecte au site d'intermédiation, associe sa demande de connexion à la fourniture d'un identifiant et/ou d'un descripteur explicite de ses caractéristiques par exemple en indiquant le nombre de lignes et le nombre de colonnes affichées, éventuellement la taille de la diagonale de l'écran et/ou son format. L'information de description des ressources inclura avantageusement la liste des formats supportés et/ou les moyens de décodage et/ou les moyens de décryptage embarqués. La description des ressources de l'appareil électronique portable peut également être implicite en ce que le site d'intermédiation peut obtenir les informations correspondantes en interrogeant une base de données à partir de l'identifiant de l'appareil qui se connecte. Un mode mixant ces deux approches peut être particulièrement efficace pour à la fois réduire le volume d'information à transmettre par l'appareil électronique lors de sa connexion au site d'intermédiation et ainsi diminuer les temps de latence. Dans ce mode de mise en oeuvre, le site d'intermédiation accède à la description des ressources standards de l'appareil de manière implicite et prend connaissance de manière explicite des ressources éventuellement ajoutées postérieurement à l'achat de l'appareil électronique portable. Il peut s'agir par exemple de décodeurs complémentaires pour exploiter des formats numériques non supportés en standard et livrés sous formes de modules logiciels additionnels appelés «plug-in». Le site d'intermédiation peut alors envoyer des images parfaitement adaptées aux caractéristiques de l'appareil. S'il s'agit d'appareils portables dotés généralement d'écrans de petite taille, l'adaptation des images à la taille de l'écran permet de limiter la quantité d'information transmise au strict nécessaire. La limitation de la quantité d'information transmise est bénéfique tant en terme de dimensionnement des infrastructures du site d'intermédiation qu'en amélioration du confort de navigation en offrant des temps de réaction plus courts toutes choses étant égales par ailleurs. Selon un mode de mise en oeuvre plus sophistiqué, l'adaptation du site d'intermédiation aux moyens de restitution et de navigation/sélection peut aller jusqu'à détecter le raccordement de l'appareil électronique portable à un dispositif de visualisation externe de plus grande dimension tel qu'un téléviseur ou un vidéoprojecteur et s'adapter en conséquence tant au niveau de l'image que des moyens de navigation reposant par exemple sur l'utilisation d'une télécommande.

Dans un mode de réalisation encore plus élaboré, du site d'intermédiation, il est possible de mettre en oeuvre des appareils électroniques portables ne disposant pas de logiciel de navigation embarqué et n'offrant possiblement que des moyens de navigation et de sélection relativement grossiers. La solution repose alors sur une navigation dans une liste textuelle et/ou à l'intérieur d'images fixes transmises par le - site d'intermédiation sous la forme de fichiers d'images comprimés, par exemple selon les standards en vigueur tels que PNG, JPEG, PDF etc. Pour diminuer les temps de réaction au cours de la navigation et permettre à l'utilisateur d'anticiper ses actes de navigation/sélection, on optera avantageusement pour un transfert du contenu des écrans par page entière avec un affichage en résolution progressive. On complètera avantageusement ce choix de mise en oeuvre en arrêtant le transfert en cours d'une page dès qu'une action de l'utilisateur sur une commande de navigation/sélection est détectée.
Cette variante de mise en oeuvre de l'invention peut aussi avantageusement être complétée par des commandes de navigation par page. Ainsi l'utilisateur peut naviguer efficacement dans l'espace des pages de propositions aux moyens de touches dédiées puis il peut naviguer dans un second temps parmi les objets proposés dans ces pages, et le cas échéant en sélectionner, par les moyens de navigation/sélection objet par objet ou par pointeur classiques. On ne sort cependant pas du cadre de l'invention en combinant en totalité ou partiellement les différents modes de mise en oeuvre pour la navigation/sélection.

Des appareils simples et équipés d'un clavier ayant des touches de navigation et de sélection dédiées peuvent alors être utilisés dans d'excellentes conditions malgré leurs limitations intrinsèques.

Un raffinement supplémentaire peut être ajouté dans le cas d'appareils équipés d'un clavier simple et avantageusement placé en bordure d'écran. Il s'agit de l'ajout dans l'image transmise par le site d'intermédiation d'une incrustation indiquant visuellement les touches du clavier réaffectées à la navigation et à la sélection avec leur nouvelle signification. L'incrustation visuelle de l'image de tout ou partie du clavier peut être rendue réaliste en respectant la forme et l'emplacement des touches. Ceci est rendu possible par la connaissance qu'a le site d'intermédiation des caractéristiques de l'appareil connecté. Cette variante permet de mettre en oeuvre le procédé selon l'invention dans des conditions acceptables en utilisant des produits électroniques portables à faible coût dotés de ressources très limitées. L'incrustation de l'image de tout ou partie du clavier dans l'image à afficher reçu de site d'intermédiation peut également être réalisée au sein de l'appareil électronique portable sans sortir du cadre de l'invention.

Après s'être connecté au site d'intermédiation par une commande d'accès direct, tel qu'un bouton physique dédié ou une icône spécifique, un premier contenu d'écran contenant des propositions et ou des informations s'affiche. Ce premier contenu d'écran peut proposer un choix préalable par enseigne. Par exemple; le choix des enseignes peut être proposé par affichage d'une pluralité de logotypes représentatifs de ces enseignes dont la sélection provoque l'arrivée sur la page d'accueil du site marchand correspondant.

Le choix préalable peut se faire aussi dans l'espace des biens et/ou services possibles, le choix du site marchand pouvant se faire plus en aval après avoir défini de manière précise ou approchée l'objet recherché. Avantageusement, le passage de l'espace des offres à l'espace des sites fournisseurs peut se faire à tout moment dans une relation de dépendance contextuelle prise en charge par le site d'intermédiation. A chaque étape d'un choix d'objet pour le cerner de plus en plus précisément, le passage à l'affichage des fournisseurs propose uniquement les sites concernés par la catégorie d'objets sélectionnée. Dans un mode de mise en oeuvre encore plus élaboré, le site d'intermédiation rapproche la demande avec l'état des stocks des fournisseurs concernés pour ne proposer in fine que les sites marchands susceptibles de livrer les objets ou les ensembles d'objets concernés. Lorsque l'objet est choisi, le site d'intermédiation peut offrir en outre, une prestation de classement automatique des sites marchands concernés par ordre croissant des prix proposés ou selon tout autre critère comme par exemple par un positionnement du site marchand dépendant du prix qu'il à payé pour son référencement.

Il est possible également d'offrir un mode mixte dans lequel des objets et des fournisseurs sont présentés au choix de l'utilisateur dans les mêmes écrans.
Selon le mode de mise en oeuvre préféré, le premier écran propose une première sélection par catégorie d'objets et/ou de services puis offre le choix des enseignes concernées pour chaque catégorie sélectionnée.

Lorsque le nombre d'objets proposé au choix dépasse un certains seuil, il est plus efficace sur le plan de l'ergonomie de passer dans un mode de sélection dans une liste arborescente textuelle dans laquelle les articles sont avantageusement classés par ordre alphabétique. Des que le choix ne porte plus que sur un nombre limité d'articles alors il est avantageux de passer dans un mode de sélection d'objets se présentant sous formes d'images fixes ou animées.

Lorsque qu'un objet est sélectionné au sein d'une pluralité il est possible d'entrer automatiquement ou sur demande explicite dans un mode dit détaillée dans lequel l'objet est présenté seul avec des éléments d'informations supplémentaires. Il peut s'agir d'informations supplémentaires textuelles, sous la forme d'images fixes, animées ou vidéo ou encore d'information parlée. L'acte d'achat est possible dès qu'un objet peut être sélectionné. On ne sort cependant pas du cadre de l'invention si la possibilité d'exécuter l'acte d'achat est conditionnée à certaines actions préalables ou n'est possible qu'à certaines étapes de la présentation des choix. L'appui sur une touche ou la désignation d'une icône spécifique permet de matérialiser l'acte d'achat à partir des informations connues du site d'intermédiation.
Dans son mode de mise en oeuvre préféré, l'invention incorpore en outre un moteur de recherche par article dans l'espace des sites marchands proposés

Outre les propositions faites aux utilisateurs dans l'espace des fournisseurs ou dans celui des biens et services, l'invention prévoie la possibilité d'incorporer dans tout ou partie des écrans, des zones d'affichage avec ou sans possibilités de sélection dédiés à de l'information à caractère publicitaire ou promotionnelle.
Il peut être gênant d'enfermer l'utilisateur dans une offre limitée à des sites marchands partenaires. L'invention offre un moyen avantageux pour remédier à cette limitation en exécutant le logiciel de navigation sur Internet/www au sein du site d'intermédiation, ce logiciel étant télé opéré depuis l'appareil électronique portable. Cette solution est particulièrement bien adaptée aux appareils électroniques portables ayant des ressources limitées ne permettant pas l'exécution d'un logiciel de navigation. Comme décrit précédemment, le site d'intermédiation envoie des fichiers d'images comprimés à l'appareil électronique portable qui sont des représentations des écrans issus de l'application navigateur. Ces images sont adaptées aux capacités de visualisation de l'appareil portable. Dans le sens montant, l'appareil électronique portable envoie les commandes de navigation de l'utilisateur à l'application de navigation embarquée dans le site d'intermédiation. Ainsi l'utilisateur peut naviguer sans restriction sur Internet/www. Des filtres retirant tous les éléments complémentaires d'animation ou de vidéo ne pouvant être exécutes par l'appareil électronique portable peuvent être mis en oeuvre avantageusement pour renforcer l'efficacité du procédé.

Avantageusement, le site d'intermédiation, gère de manière sélective l'offre d'informations et/ou d'objets numériques proposée (mode « pull») aux appareils électroniques portables. Il s'agit par exemple de ne proposer au choix de l'utilisateur seulement les objets numériques qu'il est susceptible d'exploiter dans l'appareil électronique portable connaissant les ressources disponibles pour décoder et/ou pour décrypter les contenus le cas échéant. Toujours en exploitant la connaissance des ressources de l'appareil portable dans le site d'intermédiation, il est possible de proposer d'une certaine manière les objets exploitables directement et d'une autre manière, par exemple en affichage grisé, les objets qui pourraient être exploités moyennant l'acquisition d'un composant logiciel et/ou matériel complémentaire. La sélection d'un objet présenté d'une autre manière provoque avantageusement l'apparition d'un message d'information approprié et/ou la proposition d'une connexion directe à la page correspondante d'un site marchand pour l'acquisition du composant manquant. En outre le caractère sélectif de l'offre peut résulter de l'exploitation d'informations de préférence de la part du client. Les nombreux critères de préférence et les nombreuses combinaisons entre ces critères peuvent reposer sur des choix ou des déclarations explicites de la part du client, par exemple au moment de l'enregistrement du profil initial lors de la création du compte ou encore ultérieurement en accédant aux moyens appropriés du site d'intermédiation. Dans le cas particulier des achats d'oeuvres filmées, musicales ou littéraires, les critères de préférence peuvent être par exemple le genre, l'auteur, les années, les thèmes. L'invention prévoie également une gestion implicite des préférences basée sur la connaissance par le site d'intermédiation d'informations sur le client, comme par exemple l'âge, le sexe, le lieu de résidence et sur l'historique de ses achats. Le site d'intermédiation peut également prendre en compte d'autres informations personnelles telles que date anniversaire, fête, anniversaires du conjoint ou des enfants ou encore des informations générales à caractère évènementiel ou culturel comme par exemple la saint-valentin. Ces exemples non-limitatifs peuvent être utilisés seuls ou sous toutes formes de combinaison pour proposer une offre adaptée au client potentiel et maximiser ainsi les chances de passage à l'acte d'achat.

Il est également prévu que le site d'intermédiation selon l'invention diffuse de l'information en « push » dans les appareils électroniques portables de manière plus ou moins spécifique en fonction de tout ou partie des informations associées au client disponibles dans la base de données. La diffusion plus ou moins sélective d'informations par le site d'intermédiation vers les appareils électroniques portables peut être réalisée en impliquant totalement, partiellement ou aucunement le choix des utilisateurs. Ainsi il est prévu de pouvoir proposer à l'utilisateur de sélectionner des listes de diffusion en fonction de critères qui lui sont propre portant par exemple sur la nature des contenus et/ou la périodicité des envois. Il est également possible de contrôler le niveau de préemption des contenus transmis et de leur exploitation dans les appareils électronique portables. Ce contrôle de la diffusion que maîtrise le site d'intermédiation peut être en tout ou partie soumis au choix de l'utilisateur final. Ce choix peut se faire ou être modifié à partir de l'appareil électronique portable ou nécessiter une connexion à partir un d'un équipement tiers tel qu'un ordinateur. Ce qui a été décrit précédemment relativement à l'exploitation des informations de préférence dans le cas où le client a l'initiative de la consultation des offres est également possible en mode de diffusion poussée dans lequel l'initiative des propositions revient au site d'intermédiation.

Le mode dit de diffusion poussée par le site d'intermédiation peut concerner des publicités, des offres promotionnelles associées ou non à des bons de réduction matérialisé par un code affiché ou par une fonction commandant le transfert d'un ticket électronique. Il peut s'agir également de téléchargement d'objets numériques dont les droits éventuellement associés peuvent avantageusement permettre une exploitation apparentée à une utilisation en tant qu'échantillon. Il peut s'agir par exemple de téléchargement de journaux combinant textes et images fixes ou encore de journaux multimédia combinant écrits, images fixes et/ou animées, sons et/ou vidéo, il peut s'agir aussi d'extraits de vidéos ou de films ou encore de ces oeuvres téléchargées en contenu intégral. Une oeuvre intégralement chargée dans la mémoire de l'appareil peut être visualisée gratuitement en mode échantillon et être intégralement visualisable après avoir acheté un droit de visualisation.

L'exploitation des capacités du site d'intermédiation selon l'invention à transmettre de l'information en mode poussé constitue une alternative et/ou un complément intéressant aux solutions dite de « podcasting » en ce que cela réduit la complexité pour l'utilisateur qui n'a plus à rechercher et à enregistrer des fils de syndication dans son appareil et pour l'appareil électronique portable qui n'a pas à les gérer. En outre, il y a création de valeur supplémentaire potentielle dans le site d'intermédiation par la prise en compte d'informations associées aux clients et par les possibilités d'agrégation de contenus qui vont au-delà des propositions habituelles des acteurs de l'Internet.

L'invention prévoit de gérer les souhaits des clients potentiels en particulier une liste d'objets non encore disponibles suscitant une information en retour lorsque l'objet devient disponible. Cette information peut être portée à la connaissance du client à son initiative (mode « pull ») lorsqu'il consulte la ou les pages correspondantes du site d'intermédiation. Le site d'intermédiation peut aussi gérer cette information en mode de diffusion poussée en faisant parvenir l'information de disponibilité au client par tout moyen disponible que ce dernier aura préalablement sélectionné. Le site d'intermédiation peut utiliser à cet effet ses moyens de communication avec l'appareil électronique portable ou utiliser des moyens externes au système selon l'invention comme par exemple l'envoi d'un SMS ou d'un message vocal à un téléphone portable. L'invention prévoie en outre d'offrir au client la possibilité de réserver, pour une durée déterminée, un objet précédemment indisponible qui devient disponible ou encore le préachat de cet objet ou également la mise aux enchères d'objets dont la rareté est subie ou organisée. D'autres techniques pour susciter l'envie sont prévues en mode poussé et/ou tiré comme par exemple la notification des nouveautés, et des « agents » de recherches intelligents qui peuvent être activés au coup par coup ou en permanence.
L'invention prend en charge la gestion des mises à jour de tout ou partie des logiciels embarqués dans les appareils électroniques portables. Ainsi il est possible pour le site d'intermédiation de proposer ou d'imposer de mises à jours selon qu'il s'agit de compléments fonctionnels gratuits ou payants non essentiels ou qu'il s'agit de répondre à une problématique d'infrastructure telle que la sécurité ou la compatibilité avec des processus essentiels.

L'invention peut avantageusement inclure dans l'appareil électronique portable des moyens pour prévenir le site d'intermédiation que l'appareil est connecté. Cette information peut en outre tenir compte du fait que l'utilisateur utilise ou non les capacités de communication de l'appareil portable par exemple envoyant périodiquement une information d'inutilisation des capacités de communication et/ou en informant automatiquement le site d'intermédiation du fait que l'utilisateur exploite les capacités de communication de son appareil électronique portable préalablement à toute demande de connexion de sa part. Il est en outre avantageux de détecter le fait que l'appareil électronique portable est connecté ou non à une source d'alimentation raccordée au réseau électrique et de communiquer cette information au site d'intermédiation. Cette information est particulièrement intéressante pour par exemple autoriser ou non des transferts de fichiers de grande taille ou une pluralité de fichiers à l'intérieur de sessions qui peuvent mobiliser les ressources de l'appareil électronique portable pendant des durées qui peuvent excéder la capacité des moyens d'alimentation autonomes de l'appareil. Ces raffinements optionnels de l'invention ont pour objet principal la maximisation de la performance perçue des appareils électronique portable en donnant la priorité dans l'attribution des ressources et en particulier de la bande passante du canal de communication à tous les usages pouvant affecter la qualité de service perçu par l'utilisateur.

Selon encore un autre aspect de l'invention, un moyen de lecture de carte à puce, avec ou sans contacts, permet à l'appareil électronique portable de réaliser des achats en imputant directement un compte préenregistré à crédit ouvert ou un compte à rechargement lorsque la carte correspondante est présentée à l'appareil.

Des cartes à prépaiement peuvent également être utilisées sans sortir du cadre de l'invention. Les cartes prépayées sont particulièrement bien adaptées aux achats de contenus musicaux et audiovisuels en ligne.

Avantageusement une carte à puce pourra déterminer le mode de paiement associé aux transactions mais pourra également orienter la connexion, exclusivement ou non, vers le ou les offres de biens ou de services associées ou encore vers une ou plusieurs enseignes spécifiques.

L'appareil selon l'invention peut en outre inclure avantageusement des moyens pour exploiter une carte à puce pour l'identification du souscripteur d'un service comme par exemple une carte SIM. Il est également possible d'inclure des moyens pour exploiter des cartes à puce destinées au stockage de contenus, par exemple des cartes à mémoire flash à l'état de l'art intégrant des mécanismes de protection intrinsèque comme les standards SD et Micro SD ou d'autres types de cartes n'en intégrant pas comme MMC. Bien entendu on ne sort pas du cadre de l'invention si on met simultanément en oeuvre une pluralité de moyens internes et/ou externes pour exploiter plusieurs types de cartes à puce au sein dudit appareil électronique portable.

Selon un aspect de l'invention concernant spécifiquement l'obtention de contenus numériques téléchargeables, le système met en oeuvre des solutions de gestion des licences liées à la gestion des droits associés. Dans le mode de mise en oeuvre préféré, l'appareil électronique portable envoie, au site d'intermédiation, une requête associée au moins à un élément d'identification unique. Cette requête peut être associée directement à un élément de certification unique de l'appareil électronique portable vis-à-vis des mécanismes d'autorisation d'exploitation des contenus protégés. Il est cependant avantageux de mémoriser les éléments de certification associés à un compte client dans la base de données du site d'intermédiation. Ceci permet en particulier de dissocier l'identification de l'appareil électronique portable, moyen à partir duquel on commande un objet téléchargeable, et celle du ou des appareils électroniques portables destinataires du téléchargement. Cette dissociation permet en particulier de choisir à la commande un ou plusieurs appareils destinataires pouvant ne pas inclure l'appareil par lequel la commande est passée.

Il existe de nombreuses solutions pour gérer les droits associées aux oeuvres numériques. Il peut s'agir de solutions spécialisées répondant à des besoins spécifiques par exemple de solutions adaptées à la protection des contenus selon leur nature par exemple écrits, musique ou vidéo ou encore selon le mode de distribution tel que diffusés (broadcast), transférés sous forme de fichiers stockables ou encore transféré en tant que fichiers non pérennes streaming. Il existe des « standards » différents dans chacune de ces catégories qui sont promus par des acteurs différents. En outre les appareils électroniques portables, dont les ressources sont limitées, peuvent mettre en oeuvre un seul ou quelques uns des mécanismes de protection des droits possibles. Le site d'intermédiation selon l'invention peut avantageusement mettre en oeuvre des moyens de conversion des mécanismes de protection pour permettre l'exploitation de tout contenu sur tout appareil électronique portable. Ce résultat peut être atteint de multiple façon, par exemple en transcodant les informations à livrer pour qu'elles soient adaptées aux ressources de décryptage de l'appareil destinataire. Plus avantageux en ce qu'ils n'impliquent pas de stockage de contenus au dans le site d'intermédiation, les exemples non limitatifs suivants : le site d'intermédiation informe le site marchand du ou des mécanismes de protection embarqués dans l'appareil destinataire pour que la version correspondante de l'objet numérique lui soit directement livré, en téléchargeant dans l'appareil destinataire le programme de gestion des droits correspondant à l'oeuvre à livrer etc.

On ne sort pas du cadre de l'invention dans le cas d'une gestion séparée des droits et des contenus. Il est par exemple possible d'acquérir un contenu protégé par tous moyens de transmission, par exemple par des moyens de communication ou par l'intermédiaire de tout support d'information physique, puis d'acheter une ou plusieurs licences d'exploitation, ou encore acquérir une licence gratuite le cas échéant, par l'intermédiaire du système selon l'invention.

La mise en oeuvre de l'invention permet d'offrir potentiellement tous les modes de cession habituellement proposés par les canaux de distribution physiques ou en ligne comme les exemples non limitatifs suivants:
- location avec paiement par objet pour un nombre de consommations immédiates ou en différé déterminé, sur des moyens éventuellement déterminés en type et en nombre,
- vente pour une durée indéterminée,
- vente de bons cadeaux prépayés
- location avec paiement à la durée
- prise en charge d'offres promotionnelles de diverses nature incluant les bons cadeaux , bons d'échange ou de réduction sous toutes les formes (code à saisir, objet à désigner sur l'écran etc.)
- gestion d'abonnement au service dans une approche forfaitaire ou non

Le procédé et le système de transaction selon l'invention peuvent trouver des applications dans les domaines suivants :
- vente ou location d'objets immatériels en ligne dont de la musique, de la vidéo à la demande, des oeuvres écrites lues ou jouées, des oeuvres écrites sous forme textuelle avec ou sans images ou encore des logiciels,
- vente ou location de tous types d'objets matériels en ligne dont des accessoires pour appareils électroniques portables,
- vente ou location de tout bien matériel ou immatériel par des annonces illustrées par, des photos ou des vidéos,
- vente de voyages en ligne illustrés par des photos ou des vidéos.
D'autres avantages et caractéristiques de l'invention apparaîtront à l'examen de la description détaillée d'un mode de mise en oeuvre nullement limitatif, et des dessins annexés sur lesquels :
- La figure 1 illustre l'architecture d'un système de transaction selon l'invention ;
- La figure 2 illustre les étapes du procédé selon l'invention ;
- La figure 3 illustre principalement un exemple de proposition sur l'appareil électronique portable ;
- La figure 4 illustre principalement un exemple de proposition sur l'appareil électronique portable ;
- La figure 5 illustre principalement un exemple de proposition limitée à un seul objet dans un choix arborescent tel qu'introduit l'exemple de la figure 3 sur l'appareil électronique portable ;
- La figure 6 illustre un exemple d'affichage d'un premier écran d'un appareil électronique portable ;
- La figure 7 illustre un exemple d'affichage d'un second écran qui apparaît lorsque l'on choisit d'appeler la mise en oeuvre du procédé selon l'invention. nom de produit ou de service ;
- La figure 8 illustre un exemple d'affichage d'un troisième écran qui propose une pluralité de sites marchands 81 concernés par la catégorie choisie dans l'écran précédent ; et
- La figure 9 illustre un exemple particulièrement efficace d'architecture et d'échanges d'information selon l'invention entre un appareil électronique portable, le site d'intermédiation et un site marchand représentatif.

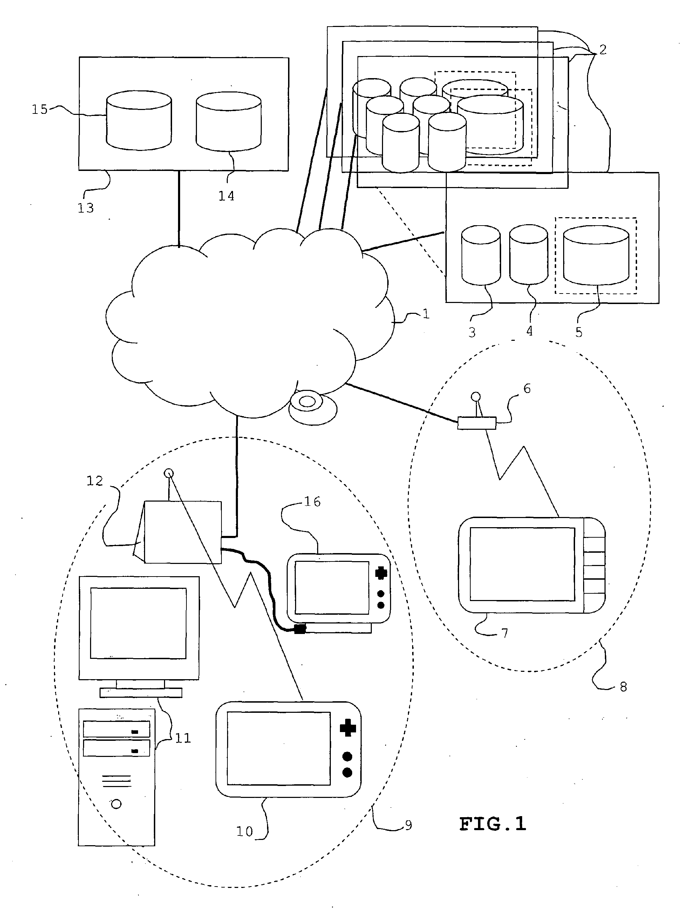

Un système selon l'invention comprend, en référence à la figure 1, au moins un site marchand 2 partenaire, le site d'intermédiation 13 et une pluralité d'appareils électroniques portables 7, 10, l'ensemble de ces ressources étant connectées au réseau Internet/www 1.

Les appareils électroniques portables 7, 10 sont connectés à Internet 1 par des moyens sans fils, par exemple par Wifi, par Wimax , UMTS ou encore par l'intermédiaire de passerelles 6, 12 définissant respectivement des sous-réseaux sans fils publics, respectivement « hot spot », « hot zone » ou cellules 8 ou des réseaux domestiques 9. Typiquement la fonction passerelle pour un réseau domestique peut être par exemple un modem/routeur ADSL avec capacité Wifi 12 ou encore il peut s'agir d'un PC raccordé à Internet par tout type de connexion et équipé d'un point d'accès Wifi. Les appareils électroniques portables 16 peuvent également être raccordés au réseau de communication par des moyens filaires comme par exemple au moyen d'une liaison USB par l'intermédiaire d'une passerelle ou d'un ordinateur. Avantageusement, la mise en oeuvre de l'invention ne nécessite pas obligatoirement la présence d'un ordinateur si d'autres moyens de connexion à Internet sont disponibles

On retrouve dans l'architecture illustrée en figure 1 les trois composants principaux du système connectés au réseau Internet/www à savoir le site d'intermédiation selon l'invention 13, la pluralité de sites marchands partenaires 2, les appareils électroniques portables à partir desquels les offres sont consultées et les achats réalisés 8, 9. Les deux principaux types de réseaux permettant la connexion sans fil des appareils électroniques portables sont illustrés en 8 et 9, respectivement par un point d'accès à un réseau d'infrastructure et par un point d'accès à un réseau domestique.

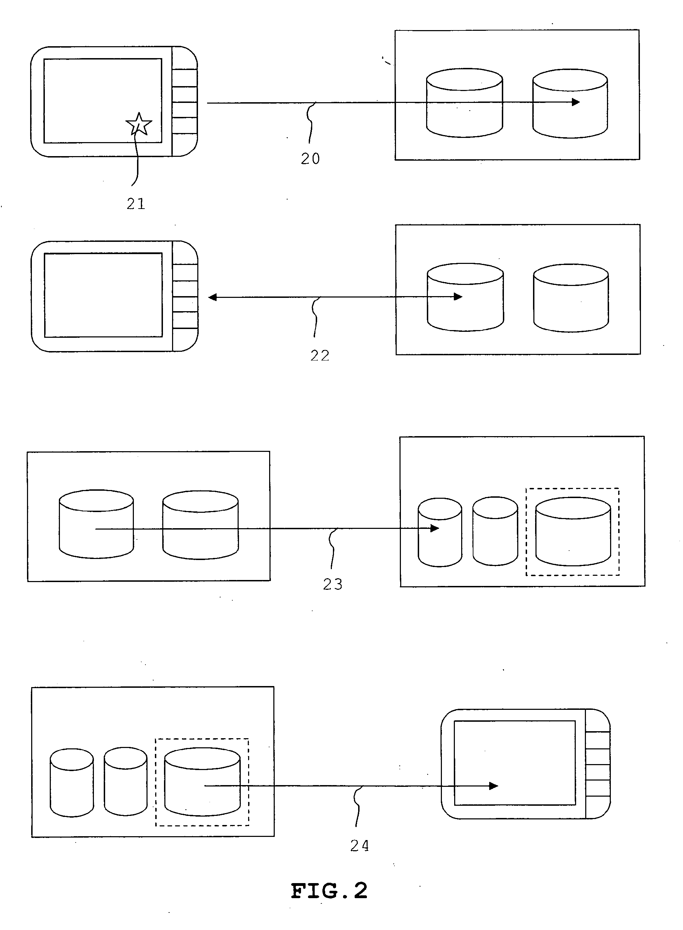

En référence à la figure 2, à l'étape initiale 20, l'appareil électronique portable se connecte, par exemple par sélection d'une icône dédiée 21, audit site d'intermédiation et s'identifie.

A l'étape 22, l'utilisateur navigue dans l'espace des propositions internes et/ou des propositions des sites marchands partenaires. Les propositions sont présentées à l'appareil électronique portable par le site d'intermédiation dans un format adapté aux caractéristiques de l'appareil. Les propositions peuvent être indifféremment hébergées par le site d'intermédiation, être hébergées par un site fournisseur et transiter par le site d'intermédiation ou être directement envoyées par le site fournisseur à l'appareil électronique portable. Il est également possible de passer d'un mode d'hébergement à l'autre au cours de la navigation dans l'espace des propositions sans sortir du cadre de l'invention. L'utilisateur sélectionne des objets le cas échéant. Lorsqu'il s'agit de contenus numériques par exemple audio ou vidéo, il est également possible sans sortir de l'invention d'offrir des extraits gratuits,

A l'étape 23 l'utilisateur se présente à la caisse du ou des sites marchands concernés ou encore à la « caisse centrale » virtuelle du site d'intermédiation le cas échéant pour valider ses achats. Si le compte client n'existe pas, une procédure de création du compte est proposée en utilisant des moyens sécurisés en particulier pour saisir le numéro de compte ou de carte bancaire. Cette procédure peut être évitée par l'utilisation de cartes à puce spécifiques.

L'étape 24 est la livraison des biens ou des services achetés. Le dessin représente le cas particulier de la livraison d'un contenu audio ou vidéo destiné à être exploité sur un appareil électronique, possiblement sur celui ayant été utilisé pour acheter mais il peut s'agir d'un autre appareil sans que l'on sorte du cadre de l'invention.

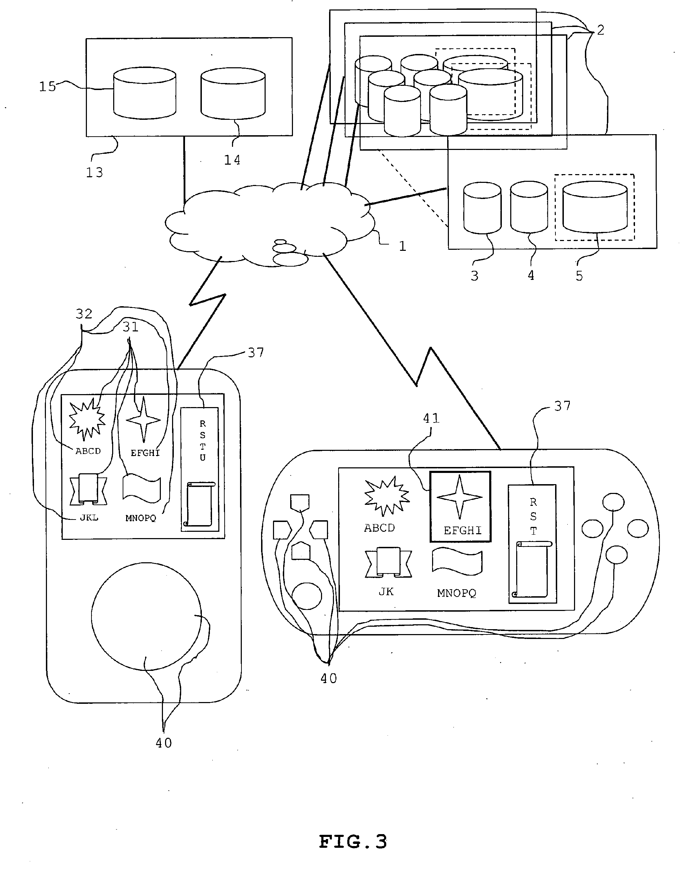

Quelle que soit l'option retenue entre priorité à l'enseigne ou priorité à l'objet, les choix peuvent être présentés à l'utilisateur comme illustré dans la figure 3.
Cet écran peut par exemple contenir des images 31 représentant les objets proposés avec éventuellement une description associée 32. L'écran peut également contenir des zones d'information 37 par exemple publicitaires, ces zones étant sélectionnables ou non. -L'image est construite par le site d'intermédiation selon l'invention en tenant compte des caractéristiques des moyens d'affichage. La sélection des objets proposés et/ou la navigation dans l'espace des choix possibles peut se faire avantageusement au moyen d'un écran tactile. Comme illustré dans l'exemple de la figure 3, des appareils électroniques portables simples sans écran tactile peuvent être néanmoins mis en oeuvre et offrir une ergonomie acceptable. Le mode de navigation le plus simple adapté à des moyens aussi réduit repose sur une exploration de l'écran à l'aide des commandes directionnelles de déplacement des moyens de pointage. Un pointeur graphique peut être déplacé dans la surface de l'écran et un moyen de validation tel qu'une touche spécifique permet de désigner l'objet dans la surface duquel le pointeur se situe. De manière encore plus simple, le pointage s'effectue d'objet en objet 31, 32 au moyen des commandes disponibles 40. L'objet pointé est indiqué par un encadrement 41, une dilatation, un changement de couleur ou tout autre moyen graphique permettant de le distinguer des autres objets présents dans l'écran. L'exemple proposé offre des commandes de navigation dans l'espace des choix de même nature 33, des commandes de changement de niveau dans la hiérarchie des choix possibles 35 et des touches de sélection directe 34 des objets présentés par reprise de leur image associées en miniature. Compte tenu de la petite taille relative des appareils électroniques portables, il peut être nécessaire de réduire l'espace des choix possibles par une étape de présélection dans une arborescence textuelle. Des informations complémentaires 37 à finalité publicitaire, promotionnelle ou informative peuvent être affichées. Ces informations peuvent dépendre ou pas du contexte des choix présentés à l'utilisateur, elles peuvent faire l'objet ou pas d'une possibilité de sélection sans sortir du cadre de l'invention.

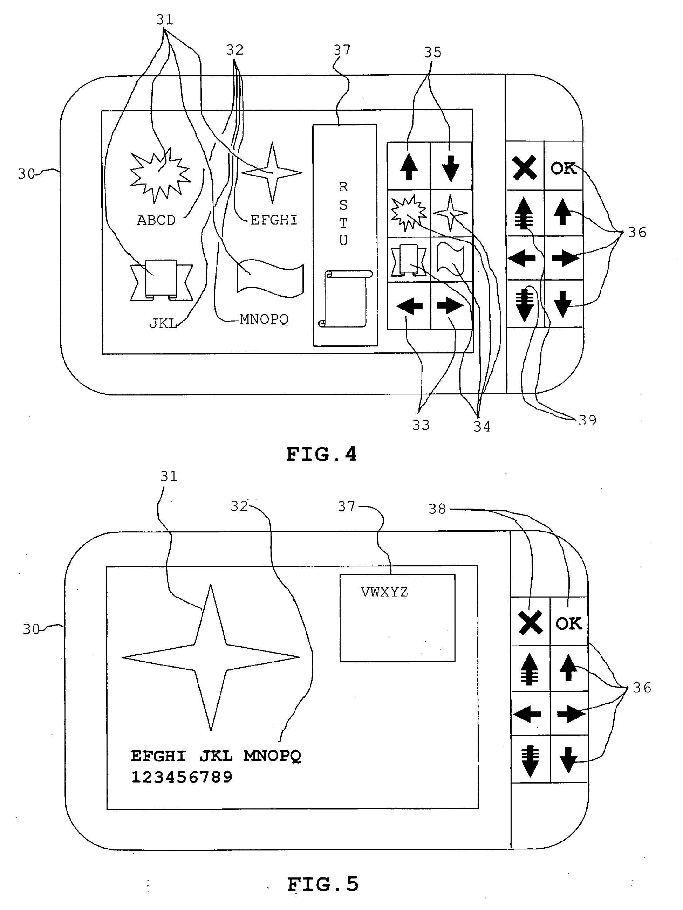

La figure 4 illustre un raffinement supplémentaire de l'invention qui peut être mis en oeuvre avantageusement dans des appareils électroniques portables simples ne disposant pas de navigateur web ni d'écran tactile.
Comme dans l'exemple précédent, l'écran contient des images 31 représentant les objets proposés avec éventuellement une description associée 32. L'écran peut également contenir des zones d'information par exemple publicitaires, ces zones étant sélectionnables ou non. L'image a été construite par le site d'intermédiation selon l'invention en tenant compte des caractéristiques des moyens d'affichage. En l'absence de commandes de sélection et/ou de navigation dédiées, il est particulièrement avantageux d'inclure dans l'image affichée, une représentation visuelle des moyens de commande de l'appareil incluant les nouvelles fonctions associées. Cette réaffectation de la signification des commandes peut concerner tout ou partie des boutons du clavier en correspondance avec le contexte pour permettre une utilisation intuitive. Cet exemple non limitatif illustre ce principe dans lequel des touches 36 à deux contacts se voient attribuées les nouvelles significations indiquées dans la représentation 33, 34, 35. Ainsi il est possible d'approcher la simplicité d'utilisation d'un écran tactile avec des moyens moins coûteux. L'exemple proposé offre des commandes de navigation dans l'espace des choix de même nature 33, des commandes de changement de niveau dans la hiérarchie des choix possibles 35 et des touches de sélection directe 34 des objets présentés par reprise de leur image associées en miniature. Compte tenu de la petite taille relative des appareils électroniques portables, il peut être nécessaire de réduire l'espace des choix possibles par une étape de présélection dans une arborescence textuelle. Des informations complémentaires 37 à finalité publicitaire, promotionnelle ou informative peuvent être affichées. Ces informations peuvent dépendre ou pas du contexte des choix présentés à l'utilisateur, elles peuvent faire l'objet ou pas d'une possibilité de sélection sans sortir du cadre de l'invention. Cette même figure 4 illustre également une autre variante de mise oeuvre pour une navigation particulièrement efficace par la présence de moyen de commandes dédiées à la navigation par page 39 qui complètent les moyens de navigation/sélection traditionnels 40 à l'intérieur d'une page. Dans ce mode de mise en oeuvre, les éléments graphiques 33, 34, 35 de réaffectation des commandes n'ont plus besoin d'être affichés ce qui libère la totalité de la surface de l'afficheur est utilisable pour la présentation des contenus. L'ergonomie est en outre améliorée par le caractère systématique de la signification des moyens de commande de navigation/sélection qui peuvent avantageusement conserver la même signification dans les l'autres applications mises en oeuvre dans l'appareil électronique portable le cas échéant.

La figure 5 illustre principalement un exemple de proposition limitée à un seul objet dans un choix arborescent tel qu'introduit l'exemple de la figure 3 sur l'appareil électronique portable. Cet exemple illustre ce qui pourrait être affiché après avoir sélectionné l'objet décrit par le texte « EFGHI » dans l'exemple de la figure 3. A partir de ce niveau dans l'arborescence de la sélection, les moyens d'affichage et de sélection sont consacrés à un seul objet présélectionné. Cette étape est l'occasion de donner par exemple des informations descriptives supplémentaires et des informations quantitatives associées tel que des prix, des disponibilités etc. Si le choix offert à l'utilisateur se résume à l'acceptation ou au refus de l'objet proposé alors des touches standards 38 peuvent convenir. Des informations complémentaires 37 à finalité publicitaire, promotionnelle ou informative peuvent être affichées sans sortir du cadre de l'invention. Ces informations peuvent dépendre ou pas du contexte des choix présentés à l'utilisateur, elles peuvent faire l'objet ou pas d'une possibilité de sélection.

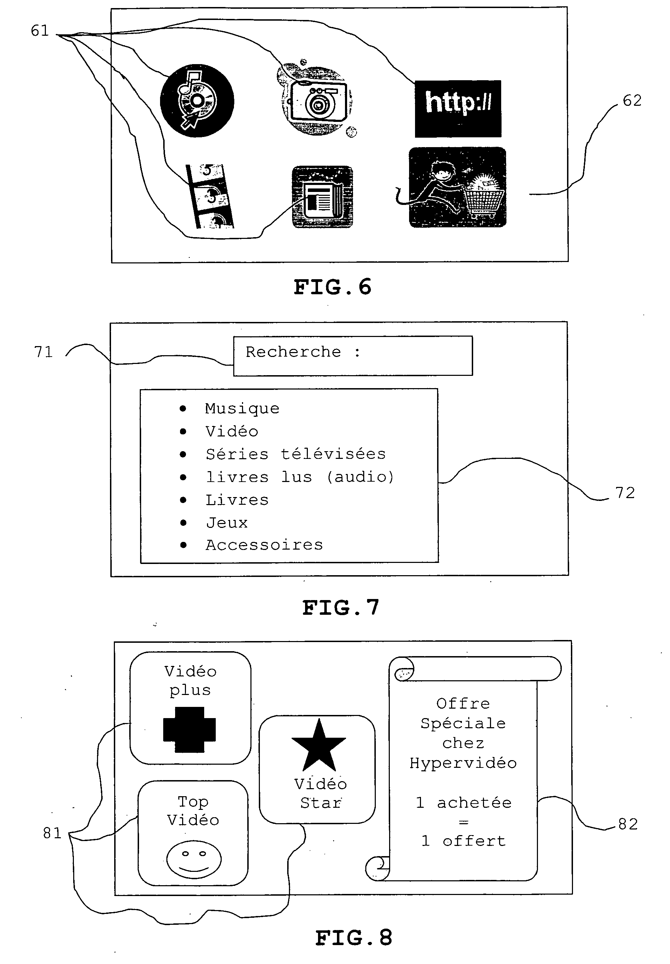

La figure 6 illustre un exemple d'affichage d'un premier écran d'un appareil électronique portable dans lequel une pluralité de fonctionnalités 61 est proposée. Il peut s'agir comme illustré de jouer de la musique, de visionner des photos ou des vidéos, de lire des livres électroniques ou encore de naviguer sur Internet. Parmi ces fonctionnalités, est proposé un accès direct 62 à des moyens mettant en oeuvre le procédé pour effectuer des transactions selon l'invention.
La figure 7 illustre un exemple d'affichage d'un second écran qui apparat lorsque l'on choisit d'appeler la mise en oeuvre du procédé selon l'invention. Il s'agit dans cet exemple de proposer des catégories 72 de produits ou de services telles que musique, vidéo, séries télévisées, livres audio, livre sous forme textuelle, jeux et accessoires. Cet écran propose en outre un service de recherche 71 à partir d'un nom de produit ou de service.
La figure 8 illustre un exemple d'affichage d'un troisième écran qui propose une pluralité de sites marchands 81 concernés par la catégorie choisie dans l'écran précédent, ici « vidéo » et une offre promotionnelle 82 qui se distingue des offres standards 81 par des caractéristiques ou des effets visuels portant par exemple sur la taille, la couleur, l'animation et/ou par des effets sonores lorsque l'on sélectionne l'objet. La sélection d'un site marchand ou d'une offre promotionnelle dans cet écran provoque l'appel de la page d'accueil du site concerné. Les offres promotionnelles peuvent être liées directement, liées indirectement ou ne pas être liées à la catégorie d'objets proposée.

Il est à noter que cette étape peut être suivie ou non d'autres étapes sans sortir du cadre de l'invention. Il peut par exemple être proposé la sélection d'une quantité pour cet objet, le retour à un autre choix, la sélection d'un fournisseur ou d'un objet équivalent, la sortie vers la conclusion de la transaction ou son abandon etc.

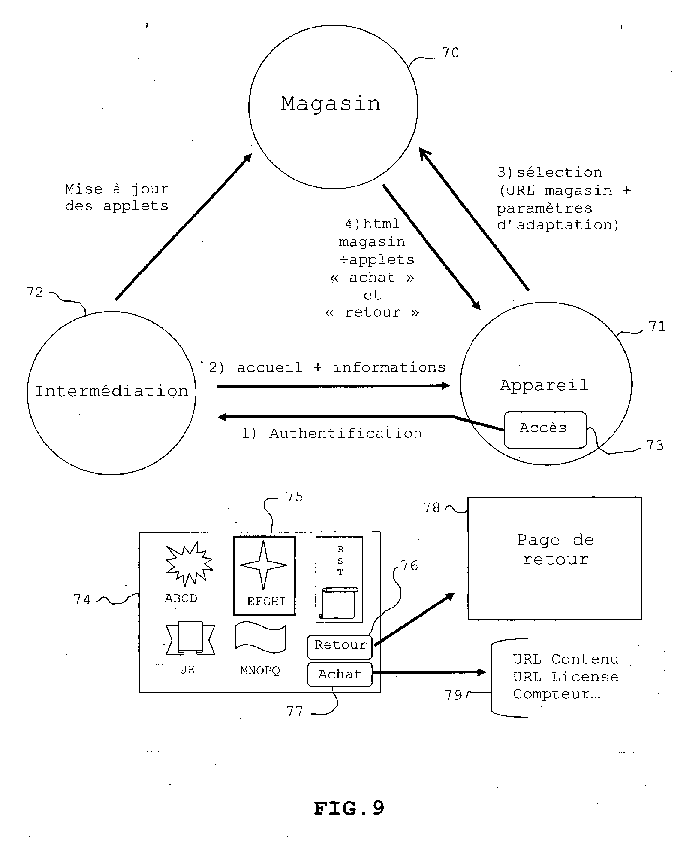

La figure 9 illustre un exemple particulièrement efficace d'architecture et d'échanges d'information selon l'invention entre un appareil électronique portable 71, le site d'intermédiation 72 et un site marchand représentatif 70. Lorsqu'un utilisateur souhaite accéder à la galerie marchande, il manifeste son souhait par l'intermédiaire de la commande d'accès direct 73 prévue à cet effet dans l'appareil électronique portable. Cette action émet une requête vers le site d'intermédiation qui identifie l'appareil et/ou authentifie l'utilisateur. Le site d'intermédiation envoie alors vers l'appareil le contenu de sa page d'accueil ainsi que des informations associées non visibles telles que les adresses web (URL) des points d'entrée dans les sites marchands proposés. Le contenu envoyé par le site d'intermédiation est adapté aux caractéristiques de l'appareil électronique portable qui sont connues après la phase d'identification. Lorsqu'un site marchand est sélectionné, l'appareil électronique envoi une requête à ce site dont l'URL à été associé à un moyen de sélection de l'appareil. Dans cet exemple, les informations échangées entre le site marchand sélectionné et l'appareil, qui pourraient transiter par le site d'intermédiation dans d'autres exemples de mise en oeuvre selon l'invention, sont ici échangées directement. La requête envoyée à l'adresse web du site choisi est en outre complétée par des paramètres pour que le site envoie ensuite des informations adaptées aux caractéristiques de l'appareil. Ces informations adaptées comprennent des objets affichables 74 et avantageusement des objets programmatiques, par exemple des scripts Java, exécutables dans l'appareil électronique. Il est prévu que le ou les objets programmatiques reçus par l'appareil électronique permettent d'offrir à ce dernier au moins deux moyens pour sortir du site marchand, une sortie sans achat 76 et une sortie par l'achat 77 d'un ou plusieurs objets sélectionnés 75 dans l'espace des propositions du site. Ce sont les objets programmatiques reçus qui définissent les actions automatiques 78, 79 qui résultent du choix du mode de sortie. Par exemple dans le cas de l'achat d'objets multimédia téléchargeables protégés, outre un rôle dans la gestion de l'aspect économique de la transaction, l'objet programmatique va définir par exemple l'adresse web du site serveur de contenu protégé, le codage en paramètre de cette adresse de la référence de l'objet à télécharger ainsi que le cas échéant, l'adresse web du site serveur de licence accompagnée des paramètres nécessaire pour définir les droits associés. Dans cet exemple il est également prévu dans l'objet programmatique des moyens pour transférer un compte rendu de la transaction réalisée dans la base de donnée du site d'intermédiation. Le site d'intermédiation 72 comprend en outre avantageusement un serveur de mise à jour d'objets programmatiques notamment destinés aux sites marchands 70. La transmission d'une mise à jour peut résulter d'une requête de la part de son destinataire potentiel, faire l'objet d'un envoi à l'initiative du serveur ou encore mettre en oeuvre un lien de syndication permettant une mise à jour automatique dès que les nouvelles versions sont disponibles. Bien sûr, l'invention n'est pas limitée aux exemples qui viennent d'être décrits et de nombreux aménagements peuvent être apportés à ces exemples sans sortir du cadre de l'invention. En outre, les exemples de solutions ou de standards techniques cités sont ceux qui sont en vigueur au moment du dépôt de la demande brevet. Ils sont susceptibles de disparaître ou d'être rapidement remplacés par d'autres sans pour autant rendre obsolète l'invention elle même. L'invention est décrite et illustrée en faisant référence à des sites marchands mais on ne sort pas de son cadre s'il s'agit de sites fournisseurs de produits matériels ou immatériels et/ou de services dans un contexte non marchand ou encore dans un contexte mélangeant des offres marchandes et non-marchandes.

## Revendications

1. Procédé pour effectuer des transactions avec au moins un site fournisseur de produits et/ou de services à partir d'un appareil électronique portable connectable à un réseau de communication, comprenant
- une connexion dudit appareil électronique à un site d'intermédiation via ledit réseau de communication, ce site d'intermédiation étant connectable auxdits sites fournisseurs de produits et/ou de services, et
- une transmission audit appareil électronique portable, d'informations, sous un format adapté aux ressources dudit appareil électronique portable.

2. Procédé selon la revendication 1, **caractérisé en ce qu'**il comprend en outre une détection d'un éventuel raccordement de l'appareil électronique portable à un équipement de télévision, et une exploitation de cette détection pour adapter les informations transmises audit appareil électronique portable.

3. Procédé selon l'une des revendications précédentes, **caractérisé en ce qu'**il comprend en outre la fourniture à l'appareil électronique portable, d'images exploitables en tant que support d'information et/ou en tant que menu de navigation et de sélection.

4. Procédé selon la revendication 3, **caractérisé en ce qu'**il comprend en outre un ajout dans l'image de menu transmise à l'appareil électronique portable, d'éléments visuels de sélection.

5. Procédé selon l'une quelconque des revendications précédentes, **caractérisé en ce qu'**il comprend en outre un envoi à un appareil électronique portable, d'images adaptées représentant des écrans issues d'une application de navigation exécutée sur le site d'intermédiation et télé opérée depuis l'appareil électronique portable.

6. Procédé selon l'une quelconque des revendications précédentes, **caractérisé en ce qu'**il comprend en outre, une offre sélective (mode « pull») d'informations et/ou d'objets numériques destinées à un ou plusieurs appareils électroniques portables.

7. Procédé selon l'une quelconque des revendications précédentes, **caractérisé en ce qu'**il comprend en outre, une diffusion sélective (mode « push ») d'informations et/ou d'objets numériques destinées à un ou plusieurs appareils électroniques portables.

8. Procédé selon l'une quelconque des revendications précédentes, **caractérisé en ce qu'**il comprend en outre, une diffusion sélective de programme ou d'un ou plusieurs composants de logiciel enfoui destinés à être embarqués dans un ou plusieurs appareils électroniques portables.

9. Procédé selon l'une quelconque des revendications précédentes, **caractérisé en ce qu'**il comprend en outre, la communication par le site d'intermédiation au site fournisseur, de données en rapport avec le client, préalablement à l'envoi de contenus adaptés à l'appareil électronique portable concerné.

10. Procédé selon l'une quelconque des revendications précédentes, **caractérisé en ce qu'**il comprend en outre, la communication par le site d'intermédiation au site fournisseur, de données en rapport avec le client, au cours d'une des étapes de la finalisation de la transaction.

11. Procédé selon l'une quelconque des revendications précédentes, **caractérisé en ce qu'**il comprend en outre un enregistrement sur le site d'intermédiation d'une adresse de l'appareil électronique portable dans un réseau de communication.

12. Procédé selon l'une quelconque des revendications précédentes, **caractérisé en ce qu'**il comprend en outre un enregistrement sur le site d'intermédiation d'au moins une donnée d'identification unique caractéristique de l'équipement électronique portable.

13. Procédé selon l'une quelconque des revendication précédentes, **caractérisé en ce qu'**il comprend en outre, un accès par le site d'intermédiation à des informations relatives à des ressources de l'appareil électronique portable connecté, notamment celles qui concernent l'affichage et/ou la navigation.

14. Procédé selon la revendication 13, **caractérisé en ce que** les informations relatives à des ressources d'un appareil électronique portable sont fournies de manière indirecte au site d'intermédiation, sous la forme de données d'identification exploitables dans une base de données accessibles depuis ledit site d'intermédiation.

15. Procédé selon l'une quelconque des revendications 13 ou 14, **caractérisé en ce qu'**il comprend en outre un enregistrement sur le site d'intermédiation de données caractéristiques des capacités d'affichage de l'équipement électronique portable.

16. Procédé selon l'une quelconque des revendications 13 à 15, **caractérisé en ce qu'**il comprend en outre un enregistrement sur le site d'intermédiation de données caractéristiques des moyens de navigation et de sélection installés dans l'équipement électronique portable.

17. Procédé selon l'une quelconque des revendications 13 à 16, **caractérisé en ce qu'**il comprend en outre un enregistrement sur le site d'intermédiation de données caractéristiques d'outils embarqués de gestion de droit sur des objets numériques protégés.

18. Procédé selon l'une quelconque des revendications précédentes, **caractérisé en ce qu'**il comprend en outre un enregistrement sur le site d'intermédiation de données en rapport avec l'utilisateur de l'appareil électronique portable.

19. Procédé selon l'une quelconque des revendications précédentes, **caractérisé en ce qu'**il comprend en outre un enregistrement sur le site d'intermédiation de données en rapport avec une opération de paiement effectuée par l'utilisateur de l'appareil électronique portable.

20. Procédé selon l'une quelconque des revendications précédentes, **caractérisé en ce qu'**il comprend en outre un enregistrement sur le site d'intermédiation de transactions réalisées avec des sites fournisseurs de produits et/ou de services.

21. Procédé selon l'une quelconque des revendications précédentes, **caractérisé en ce que** les appareils électroniques portables envoient des informations en rapport avec les transactions réalisées au site d'intermédiation.

22. Procédé selon l'une quelconque des revendications précédentes, **caractérisé en ce qu'**il comprend en outre une capacité de blocage sélectif de fonctions et/ou de services associés à un appareil électronique portable.

23. Procédé selon la revendication 22, **caractérisé en ce qu'**il comprend en outre un déblocage à distance d'un appareil électronique portable précédemment bloqué sélectivement.

24. Procédé selon l'une quelconque des revendications précédentes, **caractérisé en ce qu'**il comprend en outre une prise en charge au moins partielle par le site d'intermédiation de transactions effectuées sur les sites fournisseurs de produits et/ou de services pour le compte de clients associés à des appareils électroniques portables.

25. Procédé selon l'une quelconque des revendications précédentes, **caractérisé en ce qu'**il comprend en outre une adaptation de l'offre proposée par le site d'intermédiation en fonction du débit effectif des moyens de communication constaté par l'appareil électronique portable.

26. Procédé selon l'une quelconque des revendications précédentes, **caractérisé en ce qu'**il comprend en outre, sur le site d'intermédiation, une détection de la connexion d'un appareil électronique portable au réseau de communication.

27. Procédé selon la revendication 26, **caractérisé en ce qu'**il comprend en outre une détection d'une connexion d'un appareil électronique portable à un réseau d'alimentation électrique.

28. Procédé selon l'une quelconque des revendications précédentes, mis en oeuvre pour l'acquisition d'un objet numérique protégé depuis un site fournisseur de produits et/ou de service.

29. Procédé selon la revendication 28, **caractérisé en ce qu'**il comprend en outre un transfert d'une licence d'utilisation de l'objet numérique depuis un site gestionnaire de droits vers l'appareil électronique portable ou une autre plateforme destinataire dudit objet numérique.

30. Procédé selon la revendication 29, **caractérisé en ce qu'**il comprend en outre :
- un transfert d'une licence d'utilisation de l'objet numérique depuis un site gestionnaire des droits vers le site d'intermédiation,
- un transfert de ladite licence d'utilisation depuis le site d'intermédiation vers l'appareil électronique portable ou une autre plateforme destinataire dudit objet numérique.

31. Procédé selon la revendication 12 et l'une des revendications 28 à 30, **caractérisé en ce qu'**il comprend en outre une utilisation de données d'identification associées à l'appareil électronique portable, pour un marquage de fichiers de contenus acquis par un client, notamment par filigrane ou empreinte numérique.

32. Procédé selon l'une quelconque des revendications 28 à 31, **caractérisé en ce que** les objets numériques fournis via le site d'intermédiation sont prévus pour une consommation en direct avec ou sans stockage durable dans l'appareil électronique portable.

33. Procédé selon l'une quelconque des revendications 28 à 32, **caractérisé en ce qu'**il comprend en outre une conversion d'un mécanisme de protection associé à un objet numérique protégé délivré par un site fournisseur de service, pour permettre l'exploitation dudit objet numérique protégé sur un appareil électronique portable connectable au site d'intermédiation.

34. Procédé selon l'une quelconque des revendications 28 à 33, **caractérisé en ce qu'**il comprend en outre une gestion de l'offre proposée aux appareils électroniques portables qui tient compte des moyens de décodage et/ou des moyens de protection embarqués dans l'appareil électronique portable.

35. Système pour réaliser des transactions à partir d'appareils électroniques portables connectables à un réseau de communication par des moyens de communication, **caractérisé en ce qu'**il comprend en outre un site d'intermédiation connectable à au moins un site fournisseur de produits et/ou de services et auxdits appareils électroniques portables, ce site d'intermédiation comprenant des moyens pour adapter les informations transmises aux appareils électroniques portables en fonction de certaines de leurs caractéristiques.

36. Système selon la revendication 35, **caractérisé en ce qu'**il comprend en outre, sur le site d'intermédiation ou en relation avec ce site, au moins une base de données, pour stocker des données associées aux appareils électroniques portables accédant audit site d'intermédiation.

37. Appareil électronique portable connectable via un réseau de communication à un site d'intermédiation lui-même connectable à au moins un site fournisseur de produits et/ou de services, **caractérisé en ce qu'**il comporte des moyens de commande de connexion directe au site d'intermédiation.

38. Appareil selon la revendication 37, **caractérisé en ce qu'**il intègre fonctionnellement des moyens internes ou externes pour exploiter au moins une carte à puce.
